# EUROPÄISCHE PATENTSCHRIFT

(11) **EP 1 702 170 B1**
(45) Veröffentlichungstag und Bekanntmachung des Hinweises auf die Patenterteilung: **08.08.2007**
(21) Anmeldenummer: 05810731.9
(22) Anmeldetag: 21.11.2005
(51) Int. Cl.: F16K 31/122, F16D 33/18, F16K 47/10

(54) **KOMBINIERTE ENTLASTUNGS-UND SCHWALLSCHUTZVORRICHTUNG FÜR UNTER DRUCK SETZBARE BETRIEBSMITTELBEHÄLTER HYDRODYNAMISCHER MASCHINEN**
COMBINED RELIEF AND SURGE PROTECTION DEVICE FOR COMPRESSIBLE OPERATING MEDIUM CONTAINERS OF HYDRODYNAMIC MACHINES
DISPOSITIF COMBINE DE PROTECTION CONTRE LA SURPRESSION ET LA POUSSEE POUR DES CONTENEURS DE CARBURANT DE MACHINES HYDRODYNAMIQUES

(30) Priorität: 26.11.2004 DE 102004057375
(43) Veröffentlichungstag der Anmeldung: 20.09.2006
(73) Patentinhaber: Voith Turbo GmbH & Co. KG, 89522 Heidenheim (DE)
(72) Erfinder: LAUKEMANN, Dieter, 74541 Vellberg (DE); MONDORF, Karl, 74564 Crailsheim (DE); ADAMS, Werner, 74564 Crailsheim (DE); NEHER, Achim, 74564 Crailsheim (DE); HÖLLER, Heinz, 74564 Crailsheim (DE); WOLF, Jürgen, 74585 Rot am See (DE)
(74) Vertreter: Dr. Weitzel & Partner
(86) Internationale Anmeldenummer: PCT/EP2005/012433
(87) Internationale Veröffentlichungsnummer: WO 2006/056384

(56) Entgegenhaltungen:
- DE-A1- 10 133 342
- DE-A1- 10 317 423
- DE-C1- 3 840 658
- US-A- 3 716 995
- US-A1- 2003 131 851

## Beschreibung

Die Erfindung betrifft eine kombinierte Entlastungs- und Schwallschutzvorrichtung für unter Druck setzbare Betriebsmittelbehälter in Betriebsmittelversorgungssystemen hydrodynamischer Maschinen; ferner ein Betriebsmittelversorgungssystem hydrodynamischer Maschinen.

Hydrodynamische Maschinen in Form von hydrodynamischen Kupplungen, hydrodynamischen Retardern oder hydrodynamischen Drehzahl/Drehmomentwandlern sind in einer Vielzahl von Ausführungen aus dem Stand der Technik bekannt. Allen gemeinsam ist, dass hier Strömungskräfte zur Realisierung einer bestimmten Funktion genutzt werden. Die hydrodynamischen Komponenten werden beim Einsatz in Fahrzeugen oder in Anlagen mit stark wechselndem Betrieb durch Füllen und Entleeren des beschaufelten Arbeitskreislaufes mit einem Betriebsfluid ein- oder ausgeschaltet. Insbesondere hydrodynamische Retarder, umfassend ein als Rotorschaufelrad fungierendes Primärrad und ein als Statorschaufelrad fungierendes, vorzugsweise ortsfestes Sekundärrad, werden durch Erzeugung eines statischen Druckes auf einen Betriebsmittelspiegel befüllt und entleert. Dazu weist das Betriebsmittelversorgungssystem einen Betriebsmittelbehälter auf, in welchem das Betriebsmittel enthalten ist, wobei der Betriebsmittelbehälter jeweils mit mindestens einem Einlass in den Arbeitsraum des hydrodynamischen Retarders und einem Auslass aus dem Arbeitsraum wenigstens mittelbar verbunden ist. Wird der Betriebsmittelbehälter unter Druck gesetzt, wird das Betriebsmittel quasi in den Arbeitsraum hineingedrückt. Gleichzeitig stellt sich während des Betriebes entsprechend den Gegebenheiten, insbesondere der Drehzahl des Rotorschaufelrades bzw. den vorhandenen Auslassöffnungen aus dem Arbeitsraum und der Kanalführung ein bestimmter Betriebsmittelumlauf während des Betriebs des hydrodynamischen Retarders ein, wobei dieser vorzugsweise unter Einbeziehung des Betriebsmittelbehälters erfolgt. Zur Entleerung des hydrodynamischen Retarders wird der Betriebsmittelbehälter entlastet, d. h., die Evakuierung des Betriebsmittels aus dem Arbeitsraum des hydrodynamischen Retarders erfolgt dabei im wesentlichen durch die Rotorschaufelradrotation über die Verbindung zwischen dem Auslass und dem Betriebsmittelbehälter. Die Entlastung des Betriebsmittelbehälters erfolgt in der Regel über eine Entlastungseinrichtung, vorzugsweise in Form eines Ventils, das zwischen einem Entlastungsraum und dem Innenraum des Betriebsmittelbehälters angeordnet ist und je nach Bedarf entweder die Verbindung zwischen dem Entlastungsraum und dem Betriebsmittelbehälterinnenraum unterbricht oder aber wenigstens teilweise freigibt. Zum Aufbringen eines Überlagerungsdruckes auf den Betriebsmittelspiegel wird in der Regel dem Betriebsmittelbehälter ein Druckmittelbereitstellungssystem zugeordnet, welches wenigstens eine Druckmittelquelle umfasst, die mit dem Innenraum des Betriebsmittelbehälters verbunden ist, wobei die Verbindung vorzugsweise im vom Betriebsmittel freien Bereich, d. h. oberhalb des Betriebsmittelspiegels, erfolgt. Der Entleervorgang wird insbesondere durch Entspannung im Betriebsmittelbehälter sowie unter Ausnutzung der Rotorschaufelrotation vorgenommen. Dabei wird jedoch zum einen aufgrund Temperaturerhöhung mehr Öl in den Betriebsmittelbehälter zurückgebracht als vorher eingetragen, ferner geht durch den direkten Kontakt des Betriebsmittels mit Luft diese in Lösung und es kommt zu einer unerwünschten Aufschäumung, insbesondere Blasenbildung. Dies führt zum einen dazu, dass sich im Betriebsmittelbehälter bei mehreren hintereinander vorgenommenen Bremsvorgängen quasi ein sogenanntes Luftpolster aufbauen würde, was wiederum dazu führen würde, dass bei gleichbleibender Beaufschlagung des Betriebsmittelspiegels nur noch eine verminderte Bremswirkung erzielbar ist. Ferner ist gerade bei mehrmaligen hintereinander vorgenommenen Bremsvorgängen, die durch den erforderlichen Wechsel zwischen Entleerung und Befüllung des Arbeitsraumes charakterisiert sind, die Blasenbildung sehr nachteilig, da aufgrund des Lufteintrages diese weiter verstärkt wird und ferner somit auch Betriebsmittel-Luftgemisch in das Entlastungssystem gelangen kann, was unter Umständen zur vollständigen Funktionsunterbrechung führen kann, insbesondere wenn zur Entlastung die gleichen Leitungsverbindungen wie zur Druckbeaufschlagung verwendet werden.

Das Dokument US 3 716 995 A, das als nächstliegender Stand der Technik angesehen werden kann, offenbart eine Entlastungsvorrichtung für unter Druck setzbare Betriebsmittelbehälter in Betriebsmittelversorgungssystemen hydrodynamischer Maschinen.

Der Erfindung liegt daher die Aufgabe zugrunde, Möglichkeiten zu schaffen, die Verhältnisse im Betriebsmitteltank bei und nach erfolgter Entleerung einer hydrodynamischen Maschine möglichst stabil zu gestalten, wobei es auf eine möglichst rasche Einstellung eines beruhigten Betriebsmittelspiegels ankommt. Ferner soll Blasenbildung weitestgehend vermieden werden und eine möglichst rasche Entlastung des Betriebsmittelbehälterinnenraumes bei gewünschter Entleerung der hydrodynamischen Maschine erfolgen können, wobei die an diesen angeschlossenen Systeme vor unnötigem Betriebsmitieleintrag geschützt werden sollen. Die erfindungsgemäße Lösung soll sich dabei durch einen möglichst einfachen und kostengünstigen Aufbau auszeichnen.

Die erfindungsgemäße Lösung ist durch die Merkmale des Anspruchs 1 charakterisiert. Vorteilhafte Ausgestaltungen sind in den Unteransprüchen beschrieben. Ein erfindungsgemäßes Betriebsmittelversorgungssystem ist in Anspruch 11 beschrieben.

Erfindungsgemäß wird einem unter Druck setzbaren Betriebsmittelbehälter eine kombinierte Entlastungs- und Schwallschutzvorrichtung zugeordnet. Diese umfasst ein Gehäuse. Ferner ist mindestens eine mit dem Innenraum des Betriebsmittelbehälters koppelbare Einlasskammer vorgesehen und eine mit einem Entlastungsraum koppelbare Auslasskammer. Der Einlass- und der Auslasskammer ist ein Entlastungsventil zugeordnet, umfassend ein im Gehäuse führbares Ventilglied und einen ortsfesten Ventilsitz, wobei der Ventilsitz derart im Gehäuse angeordnet ist, dass dieser im Zusammenwirken mit dem Ventilglied die Einlasskammer von der Auslasskammer absperrt. Ferner umfasst die kombinierte Entlastungs- und Schwallschutzvorrichtung eine Schwallschutzeinrichtung. Diese weit eine Schwallplatte auf, welche an einem Führungselement außerhalb des Gehäuses führbar ist, wobei das Führungselement mit dem Ventilglied des Entlastungsventiles verbunden ist und sich durch die Einlasskammer erstreckt und an seinem vom Ventilglied abgewandten Endbereich einen Anschlag für die Bewegung der Schwallplatte aufweist. Der Schwallplatte ist ferner ein Sitz am Gehäuse zur Absperrung der Einlasskammer zugeordnet. Zwischen der Schwallplatte und dem Führungselement ist wenigstens eine Drosselstelle vorgesehen. Dem Ventilglied ist eine Betätigungseinrichtung zugeordnet.

Die erfindungsgemäße Lösung ermöglicht eine Funktionszusammenfassung der Funktion eines Entlastungsventils und eines Schwallschutzes in einer baulichen Einheit, wobei diese mit einem geringstem Aufwand unter Ausnutzung gleicher Elemente erfolgt. Dabei sind beide Funktionen jedoch hinsichtlich ihrer Aktivierung aufeinander abgestimmt, was sich insbesondere durch die Kopplung des Führungselementes für die Schwallplatte an die Bewegung des Ventilgliedes ergibt. Durch die unmittelbare Zuordnung von Ventilglied und Schwallplatte zur Einlasskammer wird auch eine Integration der beiden Funktionen auf geringstem Bauraum ermöglicht, wobei jedoch gewährleistet ist, dass die Funktion der Schwallplatte trotzdem frei entsprechend der sich einstellenden Druckverhältnisse realisiert werden kann.

Vorzugsweise ist das Gehäuse zylindrisch ausgeführt, so dass das Ventilglied ebenfalls zylindrisch ausgeführt ist. Durch diese Ausgestaltung ist insbesondere eine leichte Abdichtung durch Verwendung standardisierter Dichtelemente, beispielsweise in Form von Dichtringen, am Ventilsitz möglich. Ferner ist das Führungselement ebenfalls zylindrisch ausgebildet, so dass auch unter Krafteinwirkung immer eine optimale Führung der Schwallplatte ohne Verkanten gewährleistet ist. Denkbar wären theoretisch auch andere Profile. Diese können jedoch insbesondere im Hinblick auf die sich nicht immer gleichmäßig auf der vom Gehäuse weggewandten Stirnseite einstellenden Kräfteverhältnisse an der Schwallplatte zum Verkanten führen.

Die Betätigungseinrichtung für das Ventilglied kann unterschiedlich ausgeführt sein. Im einfachsten Fall wird das Ventilglied als Kolbenelement ausgebildet. Dieses ist an der vom Ventilsitz weggewandten Stirnseite mit Druckmittel beaufschlagbar. Dazu ist im Gehäuse ein Steuerdruckraum vorgesehen, welcher über einen entsprechenden Anschluss mit dem erforderlichen Steuerdruck beaufschlagt werden kann. Dies kann hydraulisch oder pneumatisch erfolgen. Um den Durchfluss durch das Ventil nicht zu behindern und eine selbsttätige Rückstellung des Kolbenelementes zu gewährleisten, ist auf der vom Ventilsitz abgewandten Seite des Ventilgliedes, d. h. des Kolbenelementes, ein Vorsprung vorgesehen, der sich durch eine entsprechende Durchgangsöffnung einer Zwischenwand im Gehäuse erstreckt, am vom Ventilglied abgewandten Endbereich einen eine Anschlagfläche bildenden Vorsprung trägt, wobei sich diese Anschlagfläche über eine Federeinrichtung am Gehäuse, insbesondere der Zwischenwand, abstützt. Dies ermöglicht eine selbsttätige Rückstellung bei Abbau des Druckes in der Druckkammer. Die einzelnen Längen des Vorsprunges, des Ventilgliedes, insbesondere des Kolbenelementes, sind derart ausgelegt, dass im entlasteten Zustand das Entlastungsventil dieser kombinierten Einrichtung geöffnet ist und damit die Verbindung zwischen Einlasskammer und Auslasskammer wenigstens teilweise freigibt. Gerade beim Einsatz in Fahrzeugen kann somit zur Betätigung der kombinierten Entlastungs- und Schwallschutzvorrichtung zur Betätigung auf ohnehin vorhandene Systeme zurückgegriffen werden, hier insbesondere Drucksysteme. Der Einsatz anderer Betätigungseinrichtungen wäre ebenfalls denkbar, setzt jedoch einen entsprechenden Steuerungsaufwand voraus.

Wie bereits ausgeführt, sind das Führungselement und die Schwallplatte vorzugsweise zylindrisch ausgebildet. Die Drosselstelle zwischen Führungselement und Schwallplatte wird dabei vorzugsweise durch die Passung zwischen dem Außenumfang des Führungselementes und dem Innenumfang der Durchgangsöffnung durch die Schwallplatte realisiert. Damit ergibt sich ein ringförmiger Drosselspalt, der einen gleichmäßigen Übertritt von Betriebsmittel-Luft-Gemisch ermöglicht.

Das Führungselement ist gemäß einer vorteilhaften Ausführung als Kerbnagel ausgebildet, d. h., weist bereits aufgrund seiner Ausgestaltung eine Anschlagsfläche auf. Dieser Kerbnagel ist lösbar mit dem Ventilglied verbunden. Wird das Ventilglied von einem Kolbenelement gebildet, welches vorzugsweise zylindrisch ausgeführt ist, wird der Kerbnagel im Bereich der zur Einlasskammer weisenden Stirnseite des Kolbenelementes mit diesem verbunden. Vorzugsweise erfolgt jedoch die Anordnung bei Ausführung als zylindrische Elemente immer auf einer gemeinsamen Achse, d. h. Kolbenelement, Kerbnagel und Schwallplatte sind durch eine gemeinsame Symmetrieachse charakterisiert.

Das Gehäuse der kombinierten Entlastungs- und Schwallschutzvorrichtung kann einteilig ausgeführt sein. Vorzugsweise besteht dieses jedoch aus wenigstens zwei miteinander druckdicht verbundenen Teilelementen. Dabei wird vorzugsweise die Einlasskammer von einem Endstück gebildet, welches mit dem Hauptgehäuseteil, das die Anschlüsse für die Auslasskammer trägt, verbunden ist, wobei vorzugsweise im Verbindungsbereich der Ventilsitz angeordnet wird.

Die kombinierte Entlastungs- und Schwallschutzvorrichtung ist im einfachsten Fall als 2/2-Wege-Ventil mit zusätzlicher Schwallschutzfunktion ausgestaltet, wobei die Schwallplatte der Eingangskammer zugeordnet ist. Denkbar wären auch weitere Modifikationen der Ventileinrichtung, die jedoch diese hinsichtlich der baulichen Umsetzung wieder verkomplizieren würden.

Die erfindungsgemäße kombinierte Entlastungs- und Schwallschutzvorrichtung wird in Betriebsmittelversorgungssystemen hydrodynamischer Maschinen angeordnet. Dabei wird die erfindungsgemäße kombinierte Entlastungs- und Schwallschutzvorrichtung in der Verbindung zwischen einem unter Druck setzbaren Betriebsmittelbehälter und einem Entlastungsraum angeordnet. Bei dem Entlastungsraum kann es sich dabei um die Umgebung oder einen anderen in der Anlage oder dem Fahrzeug vorgesehenen Funktionsraum handeln, der mit Druck beaufschlagbar sein kann. Die Ventileinrichtung ist dabei derart angeordnet, dass diese entweder in der Verbindungsleitung oder dem Verbindungskanal vorgesehen ist, wobei dann zu beachten wäre, dass sich die Schwallplatte ebenfalls in diesem befindet oder auch zum Teil in den Betriebsmittelbehälter hineinragen kann, beispielsweise bei Vorsehen der Möglichkeit des Einschraubens eines derartigen Ventiles in die Gehäusewandung des Betriebsmittelbehälters.

Das Betriebsmittelversorgungssystem einer hydrodynamischen Maschine, welche wenigstens ein Primärrad und ein Sekundärrad umfasst, die einen mit Betriebsmittel befüllbaren Arbeitsraum umfassen, umfasst ferner neben dem Betriebsmittelbehälter Verbindungsleitungen zwischen dem Betriebsmittelbehälter und mindestens einem Einlass in den Arbeitsraum und mindestens einem Auslass aus dem Arbeitsraum und dem Betriebsmittelbehälter. Zur Erzeugung des erforderlichen Betriebsmitteldruckes zur Befüllung der hydrodynamischen Komponente, insbesondere des Arbeitsraumes der hydrodynamischen Komponente, wird der Betriebsmittelbehälter unter Druck gesetzt. Dazu ist diesem ein Druckermittelbereitstellungssystem zugeordnet, umfassend mindestens eine Druckmittelquelle, die mit dem Innenraum des Betriebsmittelbehälters verbunden ist. Der Betriebsmittelbehälter selbst ist derart ausgeführt, dass dieser zum Zwecke der Befüllung in einen druckdichten Zustand versetzbar ist. Zum Zwecke der Entlastung ist der Betriebsmittelbehälter mit einem Entlastungsraum gekoppelt, welcher Bestandteil des Druckmittelbereitstellungssystems sein kann oder aber von einem separaten Entlastungsraum gebildet wird, der auch anderweitig in der Maschine zur Verfügung steht. Je nach Funktionszuordnung zum Primärrad und Sekundärrad kann die hydrodynamische Maschine als hydrodynamischer Retarder, hydrodynamische Kupplung oder hydrodynamischer Drehzahl-/Drehmomentwandler ausgeführt sein. Insbesondere für hydrodynamische Retarder findet ein derartiges System zum Zwecke der Realisierung eines schnellen Befüllens und Entleerens Verwendung. Denkbar ist auch der Einsatz bei hydrodynamischen Kupplungen, insbesondere bei steuer-und regelbaren hydrodynamischen Kupplungen. Nachfolgend wird die Funktionsweise anhand einer besonders bevorzugten Anwendung beim Einsatz im Betriebsmittelversorgungssystem hydrodynamischer Retarder erläutert. Zum Zwecke des Befüllens befindet sich dabei die kombinierte Entlastungs- und Schwallschutzvorrichtung im geschlossenen Zustand, d. h., der Einlasskanal, der mit dem Innenraum des Betriebsmittelbehälters gekoppelt ist, ist gegenüber der Auslasskammer druckdicht verschlossen, d. h., die Verbindung ist gesperrt. Demnach kann über das Druckmittelbereitstellungssystem, insbesondere die Druckmittelquelle, der erforderliche Druck in den Innenraum des Betriebsmittelbehälters eingebracht werden, der aufgrund seiner Wirkung auf den Betriebsmittelspiegel Betriebsmittel in den Arbeitsraum des Retarders drückt. Unterstützt wird dies auch durch die Rotorschaufelradrotation. Dabei baut sich ein Arbeitskreislauf auf, wobei ferner während des Betriebes zusätzlich zum Arbeitskreislauf im Arbeitsraum sich ein Betriebsmittelumlauf einstellt, der durch die Führung von Betriebsmittel vom Arbeitsraum wieder zum Arbeitsraum außerhalb des Arbeitsraumes charakterisiert ist. Dies erfolgt vor allem zu Kühlungszwecken. Soll nun der Retarder außer Betrieb genommen werden, ist es erforderlich, das Betriebsmittel wieder in den Betriebsmittelbehälter einzubringen. Dazu wird dieser entlastet. Die kombinierte Entlastungs- und Schwallschutzvorrichtung wird betätigt, insbesondere das Entlastungsventil wird geöffnet. Dieser Vorgang erfolgt dabei im einfachsten Fall durch Absenkung des Druckes in der Druckkammer der kombinierten Entlastungs- und Schwallschutzvorrichtung, wodurch das Ventilglied vom Ventilsitz gehoben wird und somit die Verbindung zwischen der Einlasskammer und der Auslasskammer herstellt. Dabei wird jedoch gleichzeitig aufgrund des Impulses und entsprechend der vorhandenen Verhältnisse im Innenraum des Betriebsmittelbehälters die Schwallplatte mit ihrer zum Gehäuse gewandten Stirnseite in Richtung des Gehäuses bewegt und kommt am dafür vorgesehenen Sitz im Gehäuse zum Anliegen. Dies bedeutet, dass die Schwallplatte in diesem Zustand den Zugang zur Einlasskammer versperrt. Insbesondere wenn Betriebsmittel-Luft-Gemisch in den Betriebsmittelbehälter eingetragen wird, gelangt ein Teil über den Drosselspalt in die Einlasskammer und baut auf der zum Gehäuse gewandten Fläche der Schwallplatte einen Gegendruck auf. Ist der aufgrund der Wirkung der Gewichtskraft sich ergebenden Druckes bei senkrechtem Einbau größer als der auf vom Gehäuse weggewandten Stirnseite der Schwallplatte, fällt dieser nach unten und gibt die Verbindung zwischen dem Betriebsmittelinnenraum und der Einlasskammer frei. Die kombinierte Entlastungs- und Schwallschutzvorrichtung verhindert dabei den raschen Übertritt von Betriebsmittel-Luftgemisch in den Entlastungsraum und dient der Beruhigung des Ölspiegels sowie dem Zurückfließen des durch den Drosselspalt gelangenden Teils an Betriebsmittel in den Betriebsmittelbehälter. Damit wird das Betriebsmittel wieder von der Luft getrennt und ferner ist auch bei raschem Wechsel zwischen Entleer- und Befüllvorgängen die Gefahr des Aufbaus eines Druckpolsters im Betriebsmittelbehälter nicht mehr gegeben.

Die erfindungsgemäße Lösung wird nachfolgend anhand von Figuren erläutert. Darin ist im Einzelnen folgendes dargestellt:

Die Größe des Drosselspaltes ist derart gewählt, dass das Flächenverhältnis von Ventilquerschnitt zu Spaltquerschnitt > 10, besonders bevorzugt zwischen 40 und 65 beträgt.
- Figur 1: verdeutlicht in schematisch vereinfachter Darstellung die Integration einer erfindungsgemäß gestalteten kombinierten Entlastungs- und Schwallschutzvorrichtung in einem Betriebsmittelversorgungssystem einer hydrodynamischen Maschine, insbesondere in Form eines hydrodynamischen Retarders;
- Figur 2: verdeutlicht in schematisch vereinfachter Darstellung den Grundaufbau einer erfindungsgemäß gestalteten besonders vorteilhaften kombinierten Entlastungs- und Schwallschutzvorrichtung.

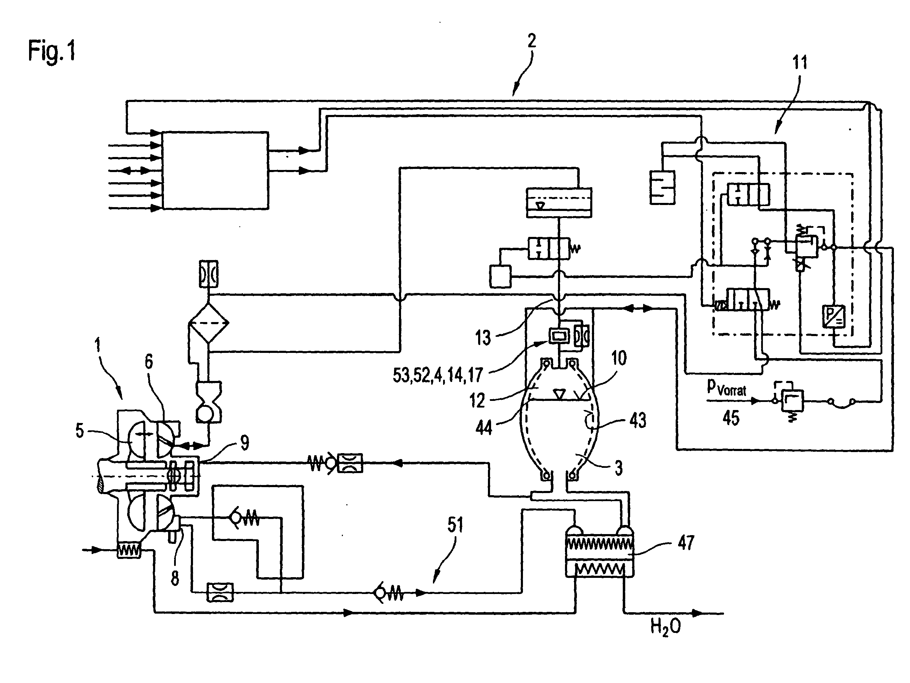

Die Figur 1 verdeutlicht in schematisch vereinfachter Darstellung anhand eines einer hydrodynamischen Maschine 1 zugeordneten Betriebsmittelversorgungssystems 2, umfassend einen Betriebsmittelbehälter 3, die Anordnung und Ausbildung einer erfindungsgemäßen kombinierten Entlastungs- und Schwallschutzvorrichtung 4. Die hydrodynamische Maschine 1 umfasst mindestens ein Primärrad 5 und ein Sekundärrad 6, die einen mit Betriebsmittel befüllbaren Arbeitsraum bilden. Je nach Lagerung, Anbindung und Ausgestaltung von Primärrad 5 und Sekundärrad 6 kann die hydrodynamische Maschine 1 als hydrodynamischer Retarder ausgebildet sein. In diesem Fall fungiert das Primärrad 5 als Rotor und das Sekundärrad 6 als Stator, wobei das Sekundärrad 6 in diesem Fall ortsfest gelagert ist. Bei Ausbildung als hydrodynamische Kupplung fungiert das Primärrad 5 als Pumpenrad und das Sekundärrad 6 als Turbinenrad, wobei das Primärrad 5 mit einem Antrieb und das Sekundärrad 6 mit einem Abtrieb drehfest gekoppelt sind. Ferner denkbar ist auch die Ausführung der hydrodynamischen Maschine 1 als hydrodynamischer Drehzahl-/Drehmomentwandler, wobei in diesem Fall zusätzlich wenigstens ein Leitrad vorgesehen ist.

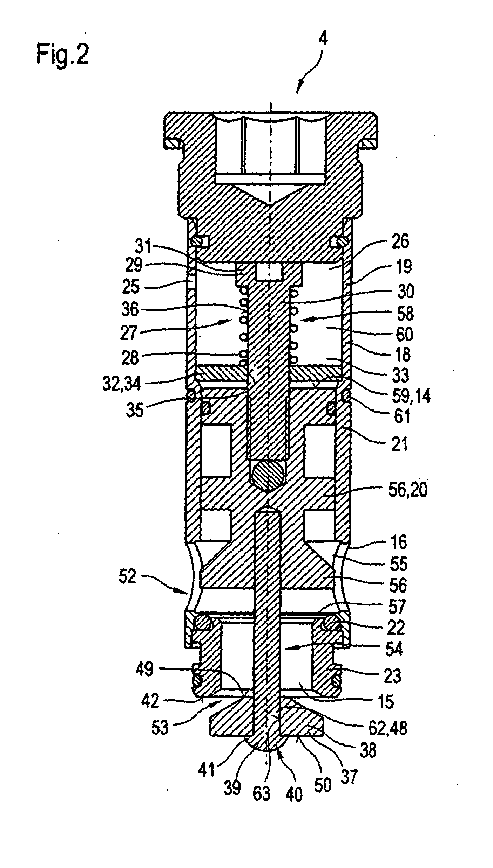

Das Betriebsmittelversorgungssystem 2 umfasst einen geschlossenen unter Druck setzbaren Betriebsmittelbehälter 3, wobei dieser mit mindestens einem Auslass 8 aus dem Arbeitsraum der hydrodynamischen Maschine 1 verbindbar ist und ferner mit wenigstens einem Einlass 9 in den Arbeitsraum unter Bildung eines Kreislaufes 51 koppelbar ist. Die Befüllung und Entleerung der hydrodynamischen Maschine 1 sowie eine gewünschte Steuerung des Füllungsgrades erfolgt durch Aufbringen eines statischen Druckes P_{statisch} auf dem Betriebsmittelspiegel 10 im Betriebsmittelbehälter 3. Dazu umfasst das Betriebsmittelversorgungssystem 2 ein Druckmittelversorgungssystem 11, welches dem Betriebsmittelbehälter 3 zugeordnet ist und wenigstens mit dem Innenraum 12 des Betriebsmittelbehälters 3 verbunden ist. Die Anbindung an den Innenraum 12 erfolgt dabei im von Betriebsmittel im Ruhezustand freien Bereich, d.h. oberhalb des sich maximal einstellenden Betriebsmittelspiegels 10. Ferner ist der Betriebsmittelbehälter 3, insbesondere der Innenraum 12, mit einem Entlastungsraum 13 wenigstens mittelbar verbunden. Als Entlastungsraum 13 kann dabei jeder Raum geringeren Druckniveaus als im Betriebsmittelbehälter 3 angesehen werden. Die Entlastung kann dabei im einfachsten Fall in die Umgebung erfolgen oder zur Beschleunigung der Evakuierung von Betriebsmittel aus dem Arbeitsraum der hydrodynamischen Maschine 1 in diesen. In der Verbindung zwischen dem Innenraum 12 und dem Entlastungsraum 13 ist die kombinierte Entlastungs- und Schwallschutzvorrichtung 4 integriert. Der Aufbau der kombinierten Entlastungs- und Schwallschutzvorrichtung 4 gemäß einer besonders vorteilhaften Ausgestaltung in Form einer Ventileinrichtung 14, die mindestens zwei Anschlüsse, einen ersten Anschluss 15 und einen zweiten Anschluss 16 umfasst, vorzugsweise in Form einer 2/2-Wege-Ventil-Einrichtung 17 mit integrierter Schwallschutzfunktion, ist in der Figur 2 dargestellt. Der Begriff Anschluss ist dabei nicht als konstruktives Element zu verstehen, sondern funktional. Eingeschlossen sind somit alle Möglichkeiten einer Verbindung. Dies bedeutet, dass es sich hierbei um Öffnungen, Vorsprünge oder andere Einzelelemente handeln kann, die eine Kopplung mit Verbindungselementen zu den entsprechenden Einrichtungen - Betriebsmittelbehälter 3 bzw. Entlastungsraum 13 - aufweisen. Der zweite Anschluss 16 ist dabei wenigstens mittelbar mit dem Entlastungsraum 13 verbunden, während der erste Anschluss 15 mit dem Betriebsmittelbehälter 3, insbesondere dem Innenraum 12 gekoppelt ist. Die kombinierte Entlastungs- und Schwallschutzvorrichtung 4 vereint baulich ein Entlastungsventil 52 und eine Schwallschutzeinrichtung 53. Ferner sind beide Systeme aufgrund der baulichen Kopplung auch funktional miteinander gekoppelt. Die kombinierte Entlastungs-und Schwallschutzvorrichtung 4 umfasst ein Gehäuse 18 in welchem eine mit dem Betriebsmittelbehälter 3, insbesondere dem Innenraum 12 über den Anschluss 15 koppelbare Einlasskammer 54 und eine mit dem Entlastungsraum 13 über den zweiten Anschluss 16 koppelbare Auslasskammer 55 angeordnet sind. Ein- und Auslasskammer 54 und 55 sind Bestandteil des Entlastungsventils 52. Das Entlastungsventil 52 umfasst ein im Gehäuse 18 verschiebbar geführtes Ventilglied 56 und einen ortsfesten Ventilsitz 57, der derart angeordnet ist, daß dieser im Zusammenwirken mit dem Ventilglied die Verbindung zwischen Ein- und Auslasskammer 54, 55 vollständig sperrt. Dem Ventilglied 56 ist eine Bestätigungseinrichtung 58 zugeordnet. Bei Ausführung der kombinierten Entlastungs- und Schwallschutzvorrichtung 4 als 2/2-Wege-Ventil-Einrichtung 17 mit Schwallschutz weist dieses im wesentlichen einen zylindrischen Aufbau auf. Das Gehäuse 18 ist vorzugsweise zylindrisch ausgeführt Das Gehäuse 18 umfasst in Einbaulage gemäß Figur 1 betrachtet in vertikaler Richtung, d. h. senkrecht ausgerichtete Wände 19, bei Ausgestaltung in zylindrischer Form werden diese vom zylindrischen Gehäuse gebildet, wobei an diesem parallel bzw. entlang der Symmetrieachse das Ventilglied 56 in Form eines Kolbenelementes 20 geführt wird. Mit diesem sind wenigstens zwei Wege für das die Ventileinrichtung 52 durchströmende Medium möglich. Gemäß einer ersten Funktionsstellung ist dabei die Verbindung zwischen der Ein- und Auslasskammer gesperrt, während in einer zweiten Funktionsstellung diese Verbindung wenigstens teilweise freigegeben wird. Das Kolbenelement 20 kommt dabei in der ersten Funktionsstellung am Ventilsitz 57 zum Anliegen. Dieser wird im einfachsten Fall vom Gehäuse 18 gebildet, vorzugsweise ist jedoch, wie hier dargestellt, ein Dichtelement 22 vorgesehen, welches den Ventilsitz 52 gegenüber dem Kolbenelement 20 abdichtet. Aus Montagegründen ist dazu im einfachsten Fall das Gehäuse 18 mehrteilig ausgeführt. Die Einlasskammer 54 wird in einem zylindrischen Endstück 23 angeordnet, welches drehfest mit dem Hauptteil 21 des Gehäuses 18 verbunden ist. Denkbar ist jedoch auch, dieses direkt am Gehäuse 18 auszubilden. Im dargestellten Fall sind die beiden Kammern 54, 55 bzw. die Anschlüsse 15 und 16 senkrecht zueinander ausgerichtet. Denkbar wäre jedoch auch ein Winkel zwischen > 0 und < 180 Grad bzw. > 180 Grad und < 360 Grad. Vorzugsweise sind der erste Anschluss 15 und damit auch die Einlasskammer 54 in Schwerkraftrichtung, d. h. in vertikaler Richtung, ausgerichtet. Dies bedeutet, dass die diese beschreibende Achse bei zylindrischer Ausführung vorzugsweise mit der Symmetrieachse des Gehäuses 18 zusammenfällt. Dem Ventilglied 56 ist eine Betätigungseinrichtung 58 zugeordnet. Diese umfasst einen mit Druckmittel beaufschlagbaren Raum 60 im Gehäuse 18, wobei der Druck auf die vom Ventilsitz weggerichtete Stirnfläche des Kolbenelementes 20 wirkt. Dazu ist bei Druckbeaufschlagung des Kolbenelementes 20 zu gewährleisten, dass das Kolbenelement 20 zumindest in dem Bereich der Druckeinwirkung druckdicht im Gehäuse 18 geführt ist. Dies wird im dargestellten Fall durch Ausführung des Kolbenelementes 20 als Mehrfachkolben realisiert, wobei der die Wirkfläche 24 für den Steuerdruck in der Druckkammer 60 bildende Bereich des Kolbenelementes 20 mittels einer Dichteinrichtung 61 gegenüber der Innenwand 19 des Gehäuses 18 abgedichtet ist. Das Kolbenelement 20 ist an seiner vom Anschluss 15 und damit der Einlasskammer 54 weggerichteten Kolbenfläche 59, welche auch die Wirkfläche 24 für den Steuerdruck bildet, mittels eines Steuerdruckes pₛₜₑᵤₑᵣ beaufschlagbar. Dazu weist das Gehäuse 18 der Ventileinrichtung 14 einen Anschluss 25 auf, der im dargestellten Fall als Durchgangsöffnung in der Gehäusewand ausgeführt ist und über den der Steuerdruck pₛₜₑᵤₑᵣ in den Innenraum 26 des Gehäuses 18 in die Druckkammer 60 eingebracht werden und auf die vom Anschluss 15 weggerichtete Kolbenfläche 59 wirken kann. Ferner sind Mittel 27 zur Rückstellung des Kolbenelementes 20 bei Entlastung des Druckraumes 60 vorgesehen. Diese umfassen im einfachsten Fall eine Federeinheit 28, über die sich das Kolbenelement 20 am Gehäuse 18, insbesondere der Gehäusewandung 19, abstützt. Dazu ist das Kolbenelement 20 lösbar mit einem einen Anschlag 29 tragenden Element 30 verbunden, wobei der Anschlag 29 vom Endstück 31 des anschlagtragenden Elementes 30 gebildet wird und in Richtung zum Kolbenelement 20 weist. An diesem Anschlag 29 stützt sich die Federeinheit 28 quasi am Kolbenelement 20 ab. Die Abstützung am Gehäuse 18 erfolgt über einen Vorsprung 32 an der Gehäusewand 19, wobei dieser in Umfangsrichtung umlaufend vorgesehen ist und der eine Anschlagsfläche 33 für die Federeinheit 28 für den vom Anschlag 29 abgewandten Endbereich bildet. Im einfachsten Fall bei zylindrischer Ausführung des Gehäuses 18 wird der Vorsprung 32 von einem Scheibenelement 34 gebildet, welches eine Durchgangsöffnung 35 aufweist, durch die das anschlagtragende Element 30 hindurchgeführt ist, wobei zwischen der Durchgangsöffnung 35 und dem Außenumfang 36 des anschlagtragenden Elementes 30 mindestens eine Spielpassung vorgesehen ist, um eine reibungslose Führung zu gewährleisten. Andererseits ist die Durchgangsöffnung 35 derart zu bemessen, dass hier eine sichere Abstützung der Federeinheit 28 erfolgen kann.

Um gerade bei hydrodynamischen Maschinen 1 bei wechselnder Entleerung und Wiederbefüllung des Arbeitsraumes eine optimale Funktionsweise des Gesamtsystem zu gewährleisten, ist eine sogenannte Schwallschutzeinrichtung 53 vorgesehen. Diese umfasst eine der Einlasskammer 54 zugeordnete Schwallplatte 37, die diesen nach Öffnung des Entlastungsventils 52 wenigstens noch über einen Zeitraum t wenigstens teilweise gegenüber dem Innenraum 12 des Betriebsmittelbehälters 3 absperrt. Die Schwallplatte 37 liegt dabei ebenfalls vorzugsweise in Form einer Scheibe 38 vor. Diese ist am Ventilglied 56, insbesondere dem Kolbenelement 20 geführt, wobei die Führung über ein sich in vertikaler Richtung vom Kolbenelement 20 weg erstreckendes Führungselement in Form eines Kerbnagels 39 erfolgt. Der Kerbnagel i39 st dabei lösbar mit dem Kolbenelement 20 verbindbar oder verbunden und weist an seinem vom Kolbenelement 20 weggerichteten Endbereich 40 einen Anschlag 41 auf. Der Anschlag 41 dient dabei der Begrenzung der Bewegbarkeit der Schwalfplatte 37 gegenüber dem Kerbnagel 39. Dabei wird entsprechend der Einbaulage bei vertikaler Ausrichtung die Schwallplatte 37 in vertikaler Richtung verschoben. Die Verschiebung der Schwallplatte 37 erfolgt dabei vorzugsweise senkrecht zum Ventilsitz 57. Der Schwallplatte 37 ist ein Sitz 42 am Gehäuse 18, der im Zusammenwirken mit der Schwallplatte 37 die Einlasskammer 54 verschließt, vorgesehen. Zwischen Schwallplatte 37 und Führungselement ist mindestens eine Drosselstelle 62 vorgesehen, welche vorzugsweise durch Wahl der Passung zwischen Außenumfang des Führungselementes und Innenumfang der Durchgangsöffnung 63 von einem ringförmigen Spalt 48 gebildet wird. Vorzugsweise sind alle Elemente zylindrich ausgeführt, so daß Ventilglied 56, Führungselement und Schwallplatte 37 sowie das Gehäuse 18 eine gemeinsame Symmetrieachse aufweisen.

Die Funktionsweise der Ventileinrichtung gestaltet sich bei einer Ausführung gemäß Figur 1 wie folgt: Soll die hydrodynamische Maschine 1 eingeschaltet, d. h. in Betrieb genommen werden, wird der Betriebsmittelbehälter 3, insbesondere der zwischen dem Betriebsmittelspiegel 10 und der Innenwandung 43 gebildete Raum 44 unter Druck gesetzt. Dazu wird über das Druckmittelversorgungssystem 11, umfassend eine Druckmittelquelle 45, Druckmittel, beispielsweise in Form eines gasförmigen Mediums in den Raum 44 eingebracht und wirkt auf den Betriebsmittelspiegel, so dass über die Verbindung zwischen dem Betriebsmittelbehälter 3 und den Einlass 9 in den Arbeitsraum Betriebsmittel in diesen eingebracht wird. Während des Normalbetriebes stellt sich ein Kreislauf ein, welcher beispielsweise in Form eines geschlossenen Kreislaufes 51 wie in der Figur 1 dargestellt vorliegt und der der Führung von Betriebsmittel aus dem Arbeitsraum über beispielsweise eine Kühleinrichtung, hier in Form eines Wärmetauschers 47, zum Arbeitsraum ermöglicht. Damit stellt sich neben dem Arbeitskreislauf 46 im Arbeitsraum ein zusätzlicher geschlossener Betriebsmittelumlauf ein. Wird nun die hydrodynamische Maschine 1 entleert, wird der Raum 44 entlastet. Die Entlastung erfolgt dabei in einen Entlastungsraum 13. Da jedoch zum einen mehr Öl zurück in den Behälter transferiert wird als eingebracht, was mit der Erwärmung zusammenhängt und aufgrund des Kontaktes mit Luft ein Öl-Luft-Gemisch zurück in den Betriebsmittelbehälter transferiert wird, kann es zur Blasenbildung kommen. Da in diesem Zustand die kombinierte Entlastungs- und Schwallschutzvorrichtung 4 ebenfalls mitaktiviert wird, indem die Ventileinrichtung in Form des Entlastungsventils 52 betätigt, d. h. geöffnet wird, wird zum einen aufgrund des durch den Öffnungsvorgang erzeugten Impulses die Schwallplatte 37 und den sich im Raum 44 einstellenden Überdruck die Schwallplatte 37 in Achsrichtung entlang des Kerbnagels 39 gegen den Sitz 42 verschoben, so daß diese die Einlasskammer 54 verschließt. Da sich jedoch zwischen der Schwallplatte 37 und den Kerbnagel 39 ein aufgrund des Spiels bzw. der gewählten Abmessungen ein ringförmiger Spalt 48 befindet, welcher als Drossel wirkt, kann trotz geöffnetem Entlastungsventil 52 sich der Druck im Raum 44 langsam durch die Drossel aufgrund des ringförmigen Spaltes 48 hin zum Entlastungsraum 13 abbauen. Dabei tritt nicht nur gasförmiges Medium in Form von Luft, sondern auch Öl-Luft-Gemisch durch diesen Spalt. Die Schwallplatte 37 bleibt so lange in der den Anschluss 15 im wesentlichen verschließenden Position, bis die Summe aus dem Druck auf der vom Raum 44 abgekehrten Stirnseite 49 der Schwallplatte 37 und der Gewichtskraft der Schwallplatte den Druck im Raum 44 auf die zu diesem gerichteten Stirnseite 50 der Schwallplatte überschreitet. Die Schwallplatte 37 fällt dann zurück und damit gelangt auch das über den Spalt 48 gelangte Öl wieder zurück in den Raum 44 bzw. den Innenraum des Betriebsmittelbehälters 3. Dadurch wird gewährleistet, dass zum einen immer eine nahezu vollständige Entlastung im Betriebsmittelbehälter erfolgt und ferner ein Aufschäumen des Betriebsmittel, welches in hoher Geschwindigkeit in den Betriebsmittelbehälter eingebracht wird, vermieden wird. Ein Druckpolster, welches nachfolgende Steuervorgänge negativ beeinflussen kann, baut sich somit nicht auf.

### Bezugszeichenliste

- 1: hydrodynamische Maschine
- 2: Betriebsmittelversorgungssystem
- 3: Betriebsmittelbehälter
- 4: kombinierte Entlastungs- und Schwallschutzvorrichtung
- 5: Primärrad
- 6: Sekundärrad
- 8: Auslass
- 9: Einlass
- 10: Betriebsmittelspiegel
- 11: Druckmittelversorgungssystem
- 12: Innenraum
- 13: Entlastungsraum
- 14: Ventileinrichtung
- 15: erster Anschluss
- 16: zweiter Anschluss
- 17: 2/2-Wege-Ventil
- 18: Gehäuse
- 19: Wand
- 20: Kolbenelement
- 21: Hauptteil
- 22: Dichtelement
- 23: zylindrisches Endstück
- 24: Wirkfläche
- 25: Anschluss
- 26: Innenraum
- 27: Mittel zur Rückstellung des Kolbenelementes 20
- 28: Federeinheit
- 29: Anschlag
- 30: anschlagtragendes Element
- 31: Endstück
- 32: Vorsprung
- 33: Anschlagfläche
- 34: Scheibenelement
- 35: Durchgangsöffnung
- 36: Außenumfang
- 37: Schwallplatte
- 38: Scheibe
- 39: Kerbnagel
- 40: Endbereich
- 41: Anschlag
- 42: Sitz im Gehäuse
- 43: Innenwandung
- 44: Raum
- 45: Druckmittelquelle
- 46: Arbeitskreislauf
- 47: Wärmetauscher
- 48: ringförmiger Spalt
- 49: Stirnseite
- 50: Stirnseite
- 51: Kreislauf
- 52: Entlastungsventil
- 53: Schwallschutzeinrichtung
- 54: Einlasskammer
- 55: Auslasskammer
- 56: Ventilglied
- 57: Ventilsitz
- 58: Betätigungseinrichtung
- 59: Kolbenfläche
- 60: Raum
- 61: Dichtelement
- 62: Drosselstelle
- 63: Durchgangsöffnung

## Patentansprüche

1. Kombinierte Entlastungs- und Schwallschutzvorrichtung (4) für unter Druck setzbare Betriebsmittelbehälter (3) in Betriebsmittelversorgungssystemen (2) hydrodynamischer Maschinen (1);
mit einem Gehäuse (18);
mit einem Entlastungsventil (52), umfassend eine mit dem Innenraum (12) des Betriebsmittelbehälters (3) koppelbare Einlasskammer (54), eine mit einem Entlastungsraum (13) koppelbare Auslasskammer (55), ein im Gehäuse (18) verschiebbar gelagertes Ventilglied (56) und ein ortsfest im Gehäuse (18) angeordneten Ventilsitz (57), wobei der Ventilsitz (57) derart angeordnet ist, dass dieser im Zusammenwirken mit dem Ventilglied (56) die Verbindung zwischen der Einlasskammer (54) und der Auslasskammer (55) sperrt;
mit einer dem Ventilglied (56) zugeordneten Betätigungseinrichtung (58); **gekennzeichnet durch** die folgenden Merkmale:
mit einer Schwallschutzeinrichtung (53), umfassend eine Schwallplatte (37), die an einem mit dem Ventilglied (56) des Entlastungsventils (52) verbundenen Führungselement außerhalb des Gehäuses (18) führbar ist, wobei das Führungselement an seinem vom Ventilglied (56) abgewandten Endbereich einen Anschlag (41) für die Bewegung der Schwallplatte (37) aufweist und einen Sitz (42) am Gehäuse (18), der im Zusammenwirken mit der Schwallplatte (37) die Einlasskammer (54) verschließt, wobei zwischen Schwallplatte (37) und Führungselement mindestens eine Drosselstelle (62) vorgesehen ist.

2. Kombinierte Entlastungs- und Schwallschutzvorrichtung (4) nach Anspruch 1, **gekennzeichnet durch** die folgenden Merkmale:
die Schwallplatte (37) ist scheibenförmig ausgebildet;
das Führungselement weist einen zylindrischen Querschnitt auf;
die Passung zwischen dem Außenumfang des Führungselementes und dem Innenumfang der Durchgangsöffnung (63) an der Schwallplatte (37) ist derart bemessen, dass sich ein ringförmiger Drosselspalt (48)ergibt.

3. Kombinierte Entlastungs- und Schwallschutzvorrichtung (4) nach Anspruch 2, **dadurch gekennzeichnet, dass** das Flächenverhältnis Ventilquerschnitt zu Spaltquerschnitt > 10, bevorzugt zwischen 40 und 65 beträgt.

4. Kombinierte Entlastungs- und Schwallschutzvorrichtung (4) nach einem der Ansprüche 1 bis 3, **dadurch gekennzeichnet, dass** das Ventilglied (56) von einem Kolbenelement (20) gebildet wird.

5. Kombinierte Entlastungs- und Schwallschutzvorrichtung (4) nach einem der Ansprüche 1 bis 4, **dadurch gekennzeichnet, dass** das Ventilglied (56), das Gehäuse (18), die Schwallschutzplatte (37) und das Führungselement eine gemeinsame Symmetrieachse aufweisen.

6. Kombinierte Entlastungs- und Schwallschutzvorrichtung (4) nach einem der Ansprüche 1 bis 5, **gekennzeichnet durch** die folgenden Merkmale:
das Ventilglied (56) stützt sich am Gehäuse (18) ab;
die Betätigungseinrichtung (58) umfasst einen mit Druckmittel beaufschlagbaren Druckraum (60) im Gehäuse (18), in welchem die Abstützung des Ventilgliedes (56) erfolgt;
der Druckraum (60) weist einen Anschluss (25) zur Beaufschlagung des Steuerdruckes auf ;
dem Ventilglied (56) sind Mittel (27) zur Rückstellung bei Entlastung des Druckraumes (60) zugeordnet;
die Mittel (27) umfassen eine am Ventilglied (56) an seiner vom Ventilsitz (57) abgewandten Stirnseite vorgesehene einen Anschlag (29) aufweisende Verlängerung, die **durch** eine Durchgangsöffnung (35) einer Zwischenwand im Gehäuse (18) führbar ist und sich an der vom Ventilsitz (57) abgewandten Stirnseite der Zwischenwand über eine Federeinheit (28) an dieser abstützt.

7. Kombinierte Entlastungs- und Schwallschutzvorrichtung (4) nach Anspruch 6, **dadurch** charakterisiert, dass die Verlängerung von einem zylindrischen lösbar mit dem Ventilglied (56) verbundenen Element gebildet wird.

8. Kombinierte Entlastungs- und Schwallschutzvorrichtung (4) nach Anspruch 7, **dadurch gekennzeichnet, dass** die Verlängerung von einer Zylinderschraube gebildet wird.

9. Kombinierte Entlastungs- und Schwallschutzvorrichtung (4) nach einem der Ansprüche 1 bis 8, **dadurch** charakterisiert, dass das Gehäuse (18) einen Gehäusehauptteil (21) aufweist, in welchem das Ventilglied (56) geführt ist und das mit einem die Einlasskammer (54) bildenden separaten Gehäuseteil (23)verbunden ist.

10. Kombinierte Entlastungs- und Schwallschutzvorrichtung (4) nach einem der Ansprüche 1 bis 9, **dadurch** charakterisiert, dass die Länge des Führungselementes für die Schwallschutzplatte (37) als Funktion der Länge der Einlasskammer (54), der Abmessung und Dimension der Schwallschutzplatte (37), des Gewichtes sowie der theoretisch sich einstellenden Druckverhältnisse im Betriebsmittelbehälter gewählt wird.

11. Betriebsmittelversorgungssystem (2) für hydrodynamische Maschinen (1), insbesondere hydrodynamischer Retarder oder hydrodynamische Kupplungen, umfassend mindestens ein Primärrad (5) und ein Sekundärrad (6), die einen mit Betriebsmittel befüllbaren Arbeitsraum bilden;
mit einem unter Druck setzbaren druckdicht verschließbaren Betriebsmittelbehälter (3);
mit mindestens einer Verbindungsleitung zwischen mindestens einem Einlass (8) des Arbeitsraumes und dem Betriebsmittelbehälter (3) und
mit einer Verbindungsleitung zwischen mindestens einem Auslass (9) aus dem Arbeitstraum und dem Betriebsmittelbehälter (3);
mit einem Druckmittelversorgungssystem (11), welches mit dem Innenraum (12) des Betriebsmittelbehälters (3) im von Betriebsmittel freien Bereich verbunden ist, wobei das Druckmittelversorgungssystem (11) mindestens eine Druckmittelquelle umfasst;
mit mindestens einer Verbindung zwischen dem Innenraum (12) des Betriebsmittelbehälters (3) und einem Entlastungsraum (13), wobei in der Verbindung eine kombinierte Entlastungs- und Schwallschutzvorrichtung (4) gemäß einem der Ansprüche 1 bis 10 angeordnet ist.

12. Betriebsmittelversorgungssystem nach Anspruch 11, **dadurch** charakterisiert, dass die kombinierte Entlastungs- und Schwallschutzvorrichtung in vertikaler Richtung eingebaut ist, so dass das Ventilglied in vertikaler Richtung bewegbar ist und die Schwallschutzplatte in horizontaler Richtung ausgerichtet ist.

## Claims

1. A combined relief and surge protection apparatus (4) for pressurizable operating medium reservoirs (3) in operating medium supply systems (2) of hydrodynamic machines, comprising a housing (18), a relief valve (52) with an inlet chamber (54) which can be coupled with the inner space (12) of the operating medium reservoir (3), an outlet chamber (55) which can be coupled with a relief chamber (13), a valve member (56) which is displaceably held in the housing (18) and a valve seat (57) which is arranged in a stationary manner in the housing (18), with the valve seat (57) being arranged in such a way that the same blocks the connection between the inlet chamber (54) and the outlet chamber (55) in cooperation with the valve member (56), and an actuating device (58) associated with the valve member (56), **characterized by** the following features:
a surge protection device (53) with a baffle plate (37) which can be guided on a guide element outside of the housing (18), which guide element is connected with the valve member (56) of the relief valve (52), with the guide element comprising a stop (41) for the movement of the baffle plate (37) at its end region averted from the valve member (56), and a seat (42) on the housing (18) which seals the inlet chamber (54) in cooperation with the baffle plate (37), with at least one throttle point (62) being provided between baffle plate (37) and guide element.

2. A combined relief and surge protection apparatus (4) according to claim 1, **characterized by** the following features:
the baffle plate (37) has a disk-like configuration, the guide element has a cylindrical cross section, the alignment between the outer circumference of the guide element and the inside circumference of the pass-through opening (63) on the baffle plate (37) is dimensioned in such a way that an annular throttle gap (48) is obtained.

3. A combined relief and surge protection apparatus (4) according to claim 2, **characterized in that** the surface ratio of the valve cross section to the gap cross section is > 10, preferably between 40 and 65.

4. A combined relief and surge protection apparatus (4) according to one of the claims 1 to 3, **characterized in that** the valve member (56) is formed by a piston element (20).

5. A combined relief and surge protection apparatus (4) according to one of the claims 1 to 4, **characterized in that** the valve member (56), the housing (18), the baffle plate (37) and the guide element have a common axis of symmetry.

6. A combined relief and surge protection apparatus (4) according to one of the claims 1 to 5, **characterized by** the following features:
the valve member (56) rests on the housing (18), the actuating device (58) comprises a pressure chamber (60) in the housing which can be pressurized with a pressure medium and in which the support of the valve member (56) is performed, the pressure chamber (60) comprises a connection (25) for applying the control pressure; the valve member (56) is associated with means (27) for resetting upon relief of the pressure chamber (60), the means (27) comprise an extension which is provided on the valve member (56) on its face side averted from the valve seat (57) and
which can be guided through a pass-through opening (35) of an intermediate wall in the housing (18) and rests via a spring unit (28) on the face side of the intermediate wall averted from the valve seat (57).

7. A combined relief and surge protection apparatus (4) according to claim 6, **characterized in that** the extension is formed by an element connected in a cylindrically detachable manner with the valve member (56).

8. A combined relief and surge protection apparatus (4) according to claim 7, **characterized in that** the extension is formed by a cheese-head screw.

9. A combined relief and surge protection apparatus (4) according to one of the claims 1 to 8, **characterized in that** the housing (18) comprises a main part (21) in which the valve member (56) is guided and which is connected with a separate housing part (23) forming the inlet chamber (54).

10. A combined relief and surge protection apparatus (4) according to one of the claims 1 to 9, **characterized in that** the length of the guide element for the baffle plate (37) is chosen as a function of the length of the inlet chamber (54), the size and dimension of the baffle plate (37), the weight and the theoretically obtained pressure conditions in the operating medium reservoir.

11. An operating medium supply system (2) for hydrodynamic machines (1), especially hydrodynamic retarders or hydrodynamic couplings, comprising at least one primary wheel (5) and a secondary wheel (6) forming a working chamber which can be filled with operating medium, a pressurizable operating medium reservoir (3) which can be sealed in a pressure-tight manner, at least one connecting line between at least one inlet (8) of the working chamber and the operating medium reservoir (3) and one connecting line between at least one outlet (9) from the working chamber and the operating medium reservoir (3), a pressure medium supply system (11) which is connected with the inside space (12) of the operating medium reservoir (3) in the section free from operating medium, with the pressure medium supply system (11) comprising at least one pressure medium source, at least one connection between the inside space (12) of the operating medium reservoir (3) and a relief chamber (13), with a combined relief and surge protection apparatus (4) according to one of the claims 1 to 10 being arranged in the connection.

12. An operating medium supply system according to claim 11, **characterized in that** the combined relief and surge protection apparatus is installed in the vertical direction, so that the valve member can be moved in the vertical direction and the baffle plate is aligned in the horizontal direction.

## Revendications

1. Dispositif (4) combiné de détente et de protection contre les projections pour des réservoirs (3) de fluide de travail susceptibles d'être mis en pression dans des systèmes d'alimentation (2) en fluide de travail de machines hydrodynamiques (1);
avec un boîtier (18);
avec un détendeur (52), comprenant une chambre d'admission (54) apte à être couplée avec le volume intérieur (12) du réservoir de fluide de travail (3), une chambre de sortie (55) apte à être couplée avec une enceinte de détente (13), un organe formant clapet (56) monté mobile en coulissement dans le boîtier (18) et un siège de clapet (57) disposé de façon fixe dans le boîtier (18), le siège de clapet (57) étant disposé de manière à interdire la liaison entre la chambre d'admission (54) et la chambre de sortie (55) en coopération avec l'organe formant clapet (56);
avec un système d'actionnement (58) associé à l'organe formant clapet (56) ; **caractérisé par** les particularités suivantes:
avec un système de protection (53) contre les projections, comprenant une plaque anti-projections (37) apte à être guidée en dehors du boîtier (18) sur un élément de guidage relié à l'organe formant clapet (56) du détendeur (52), l'élément de guidage comportant, dans sa zone d'extrémité détournée de l'organe formant clapet (56), une butée (41) pour le déplacement de la plaque anti-projections (37) et un siège (42) sur le boîtier (18) qui obture la chambre d'admission (54) en coopération avec la plaque anti-projections (37), un étranglement (62) au moins étant prévu entre la plaque anti-projections (37) et l'élément de guidage.

2. Dispositif (4) combiné de détente et de protection contre les projections selon la revendication 1, **caractérisé par** les particularités suivantes:
la plaque anti-projections (37) est conformée en forme de disque;
l'élément de guidage est de section transversale cylindrique;
l'ajustement entre le périmètre externe de l'élément de guidage et le périmètre interne du trou traversant (63) sur la plaque anti-projections (37) est conçu de manière à former une fente d'étranglement (48) annulaire.

3. Dispositif (4) combiné de détente et de protection contre les projections selon la revendication 2, **caractérisé en ce que** le rapport entre la section du clapet et la section de la fente est > 10, et est de préférence compris entre 40 et 65.

4. Dispositif (4) combiné de détente et de protection contre les projections selon l'une quelconque des revendications 1 à 3, **caractérisé en ce que** l'organe formant clapet (56) est formé par un élément formant piston (20).

5. Dispositif (4) combiné de détente et de protection contre les projections selon l'une quelconque des revendications 1 à 4, **caractérisé en ce que** l'organe formant clapet (56), le boîtier (18), la plaque anti-projections (37) et l'élément de guidage ont un axe de symétrie commun.

6. Dispositif (4) combiné de détente et de protection contre les projections selon l'une quelconque des revendications 1 à 5, **caractérisé par** les particularités suivantes:
l'organe formant clapet (56) s'arc-boute contre le boîtier (18);
le système d'actionnement (58) comprend dans le boîtier (18) une chambre de mise en pression (60) apte à être mise en pression avec un fluide comprimé et dans laquelle s'arc-boute l'organe formant clapet (56);
la chambre de mise en pression (60) comporte un raccord (25) pour la mise en pression de commande;
des moyens (27) de rappel en cas de détente de la chambre de mise en pression (60) sont associés à l'organe formant clapet (56);
les moyens (27) comprennent un prolongement comportant une butée (29) prévu sur l'organe formant clapet (56), sur la face d'extrémité détournée du siège du clapet (57), ce prolongement étant apte à traverser un trou traversant (35) d'une cloison dans le boîtier (18) et s'arc-boutant par l'intermédiaire d'une unité formant ressort (28), sur la face d'extrémité détournée du siège de clapet (57) de la cloison, contre celle-ci.

7. Dispositif (4) combiné de détente et de protection contre les projections selon la revendication 6, **caractérisé en ce que** le prolongement est formé par un élément cylindrique, relié de façon amovible à l'organe formant clapet (56).

8. Dispositif (4) combiné de détente et de protection contre les projections selon la revendication 7, **caractérisé en ce que** le prolongement est formé par une vis cylindrique.

9. Dispositif (4) combiné de détente et de protection contre les projections selon l'une quelconque des revendications 1 à 8, **caractérisé en ce que** le boîtier (18) comporte une partie principale (21) de boîtier dans laquelle est guidé l'organe formant clapet (56) et qui est relié à une partie de boîtier (23) séparée formant la chambre d'admission (54).

10. Dispositif (4) combiné de détente et de protection contre les projections selon l'une quelconque des revendications 1 à 9, **caractérisé en ce que** la longueur de l'élément de guidage de la plaque anti-projections (37) est choisie en fonction de la longueur de la chambre d'admission (54), des mesures et de la dimension de la plaque anti-projections (37), du poids ainsi que des conditions de pression survenant théoriquement dans le réservoir de fluide de travail.

11. Système d'alimentation (2) en fluide de travail pour des machines hydrodynamiques (1), notamment pour des ralentisseurs hydrodynamiques ou des embrayages hydrodynamiques, du type comprenant au moins une roue primaire (5) et une roue secondaire (6) qui forment une enceinte de travail apte à être remplie de fluide de travail;
avec un réservoir de fluide de travail (3) apte à être obturé de manière à être étanche à la pression et à être mis en pression;
avec au moins un conduit de liaison entre au moins une admission (8) de l'enceinte de travail et le réservoir de fluide de travail (3) et avec un conduit de liaison entre au moins une sortie (9) de l'enceinte de travail et le réservoir de fluide de travail (3);
avec un système d'alimentation en fluide comprimé (11) qui est relié au volume interne (12) du réservoir de fluide de travail (3) dans la zone ne contenant pas de fluide de travail, le système d'alimentation en fluide comprimé (11) comprenant au moins une source de fluide comprimé;
avec au moins une liaison entre le volume interne (12) du réservoir de fluide de travail (3) et une enceinte de détente (13), un dispositif (4) combiné de détente et de protection contre les projections selon l'une quelconque des revendications 1 à 10 étant disposé dans la liaison.

12. Système d'alimentation en fluide de travail selon la revendication 11, **caractérisé en ce que** le dispositif combiné de détente et de protection contre les projections est monté dans le sens vertical de sorte que l'organe formant clapet est mobile dans le sens vertical et que la plaque anti-projections est orientée dans le sens horizontal.
